# EUROPEAN PATENT APPLICATION

(11) **EP 3 106 331 A1**
(43) Date of publication of application: **21.12.2016**
(21) Application number: 15172133.9
(22) Date of filing: 15.06.2015
(51) Int. Cl.: B60J 7/057, B60J 7/043

(54) **SLIDING ROOF DEVICE FOR MOTOR VEHICLE**

(71) Applicant: Webasto SE, 82131 Stockdorf (DE)
(72) Inventor: Serneels, Marc, 85140 Les Essarts (FR); Renaudin, Fabrice, 85290 St Laurent\Sèvre (FR); Godet, Thierry, 79150 Voulmentin (FR); Hölzel, Dominik, 82131 Stockdorf (DE)
(74) Representative: Epping - Hermann - Fischer

(57) **Abstract**

The invention relates to a sliding roof device for a motor vehicle, comprising a movable cover for selectively closing and at least partially exposing a roof opening in the motor vehicle roof, the movable cover being also raisable at a rear edge thereof into a tilted ventilation position,

This device comprises:
- two first displacement means (4, 6), guided in translation respectively into two first guiding means (71) facing each other on each longitudinal edge of the roof opening, these first displacement means being configured for raising, lowering and sliding rearwards and forwards said movable cover (12),
- two carriages (5) named "second carriages", guided in translation respectively into two second guiding means (72) facing each other on each longitudinal side of the roof opening, these second carriages (5) being configured for raising the rear edge of said movable cover (12) into the tilted ventilation position and for lowering it toward the roof opening,
- two cables (81, 82) driven by driving means, each cable (81, 82) comprising an active strand (810) and a dead strand (821), the active strand of each cable (81, 82) being linked to one of the two first displacement means (4, 6) disposed on one longitudinal side of the roof opening whereas the dead strand of the same cable is linked to the second carriage (5) which is disposed on the opposite longitudinal side of the roof opening, the cable being driven in such a way that when the first displacement means (4, 6) are moved rearwards, the second carriages (5) are moved forwards and vice versa.

## Description

The invention relates to the technical field of motor vehicle.

The present invention concerns more precisely a sliding roof device for motor vehicle comprising a movable cover for selectively closing or partially exposing a roof opening in the motor vehicle roof, this cover being also raisable into a tilted ventilation position.

Sliding roof devices for motor vehicle comprising a cover movable between a closed position, an open position and a tilted position are already known from the prior art.

Nevertheless, such sliding roof devices present the following drawbacks:
- they are difficult to close at high speed (i.e. above 120 km per hour),
- the stiffness of the cover panel is not high enough in tilted position, especially if it is of big dimensions,
- they are too complex due to their high number of constitutive pieces and therefore too expensive.

Accordingly, the object of the present invention is to provide a sliding roof device for motor vehicle of simple structure, stable and easily closable even at high speed and not expensive.

Thus the invention relates to a sliding roof device for a motor vehicle, comprising a movable cover for selectively closing and at least partially exposing a roof opening in the motor vehicle roof, the movable cover being also raisable at a rear edge thereof into a tilted ventilation position.

According to the invention it further comprises:
- two first displacement means, guided in translation respectively into two first guiding means facing each other on each longitudinal edge of the roof opening, these first displacement means being configured for raising, lowering and sliding rearwards and forwards said movable cover,
- two carriages named "second carriages", guided in translation respectively into two second guiding means facing each other on each longitudinal side of the roof opening, these second carriages being configured for raising the rear edge of said movable cover into the tilted ventilation position and for lowering it toward the roof opening,

two cables driven by driving means, each cable comprising an active strand and a dead strand, the active strand of each cable being linked to one of the two first displacement means disposed on one longitudinal side of the roof opening whereas the dead strand of the same cable is linked to the second carriage which is disposed on the opposite longitudinal side of the roof opening, the cables being driven in such a way that when the first displacement means are moved rearwards, the second carriages are moved forwards and vice versa

Due to these features of the invention and particularly to the two second carriages, the cover panel can be easily closed even at high speed and with a cheap device.

Further, in tilted position of the cover panel, the two second carriages maintained the rear edge of the cover panel. Consequently, the dimensions of the cover panel can be increased.

According to other advantageous and non limiting features of the invention, taken alone or in combination:
- the movable cover is provided with a sliding element on both of its longitudinal sides, each sliding element being an elongated profile presenting two opposite vertical faces and being provided with a slider at its front end, a rear cam groove being formed in one of its vertical faces, the slider being able to slide into the first guiding means and to act as a pivoting point during the displacement of the movable cover in the tilted ventilation position and it that each second carriage is provided with a guide pin configured to slide inside said rear cam groove such that a forwards movement of said second carriage raises the rear edge of the movable cover into the tilted ventilation position and such that a rearwards movement of said second carriage lowers the movable cover towards the roof opening;
- it comprises two guide rails, each one being disposed along each longitudinal edge of the roof opening, each guide rail comprising two parallel longitudinal paths, namely a first path and a second path which constitute respectively the first and the second guiding means;
- the top part of the first path is configured to constitute the guiding means of the slider of the sliding element;
- each first displacement means comprises a carriage named "first carriage" and a locking part, each first carriage being linked to the active strand of one cable, in that the movable cover is provided with a sliding element on both of its longitudinal sides, each sliding element being an elongated profile presenting two opposite vertical faces and being provided with a slider at its front end, the slider being able to slide into the first guiding means and to act as a pivoting point during the displacement of the movable cover in the tilted ventilation position, the locking part being provided with tilting means cooperating with corresponding articulation means provided on the sliding element for guiding the sliding element during the raising and the lowering of the cover panel in the tilted ventilation position and in that the first carriage and the locking part are provided with cooperating means authorizing a relative movement of the first carriage relative to the locking part on a limited stroke and the locking of the first carriage with the locking part beyond this limited stroke such that once locked together, the movement of the first carriage in one direction causes the movement of the locking part in the same direction;
- the locking part comprises an elongated part, the rear end of which is bent downward to form a hook, in that said locking part is provided on at least one of its lateral side with a driving cam groove also bent downward and closed at its rear end, in that the first carriage is provided with at least one front guide pin able to slide inside said driving cam groove, this guide pin and this driving cam groove constituting said cooperating means, in that the first driving rail is provided with a hole configured to received said hook, such that during the rearwards movement of the first carriage, the front guide pin slides inside the driving cam groove on a limited stroke until it reaches the hooked closed end of said driving cam groove inside which it is locked, such that when following its rearwards movement, the first carriage firstly causes the hook of the locking part to exit the hole, then the locking part to follow rearwards and the movable cover to be displaced rearwards and such that when following its forwards movement, the first carriage firstly displaces the locking part until the hook being locked in the hole, thus displacing the movable cover forwards and secondly continue its forwards movement relative to the locking part for lowering the movable cover toward the roof opening;
- a front cam groove is formed in at least one of the vertical faces of the sliding element, in that each first carriage is provided with at least one guide pin configured to slide inside said front cam groove and in that each front cam groove is configured such a way that a rearwards movement of the first carriage raises the movable cover into the tilted ventilation position and a forwards movement of the first carriage lowers the movable cover towards the roof opening;
- the driving means are two distinct motors, each one driving one of the two cables.
- the driving means are a sole motor which drives the two cables in opposite directions;

The invention also relates to a motor vehicle comprising a roof opening and a sliding roof device such as above-mentioned.

Additional objects as well as features and advantages of the invention will become apparent from the description set forth hereunder when considered in conjunction with the accompanying drawings, which represent several possible embodiments. On these drawings:
- figure 1 is a schematic perspective plan view of the top part of a vehicle having a sliding roof according to the invention,
- figure 2 is a schematic top view of the carriages which constitute a part of the driving mechanism of the sliding roof according to the invention,
- figure 3 is an exploded view of some of the constitutive parts of the sliding roof according to the invention, this view being taken from the outside of the vehicle, the front part of the vehicle being on the left side of this figure,
- figure 4 is an exploded view of some of the same constitutive parts as in figure 3, this view being taken from the inside of the vehicle, (i.e. the opposite side of figure 3),
- figure 5 is a perspective view in an enlarged scale of a locking part of the sliding roof,
- figure 6 is a transverse section view of the guide rail and the second carriage,
- figure 7 is a transverse section view of the guide rail, the first carriage, the locking part and the sliding element,
- figures 8 to 12 are longitudinal sections showing the cinematic of the movement of the sliding roof during its opening movement.

In the description and the claims, the words "front" or "forward" and the words "rear" or "rearwards" are used by reference to the front F and the rear R of the vehicle equipped with the sliding roof device of the invention.

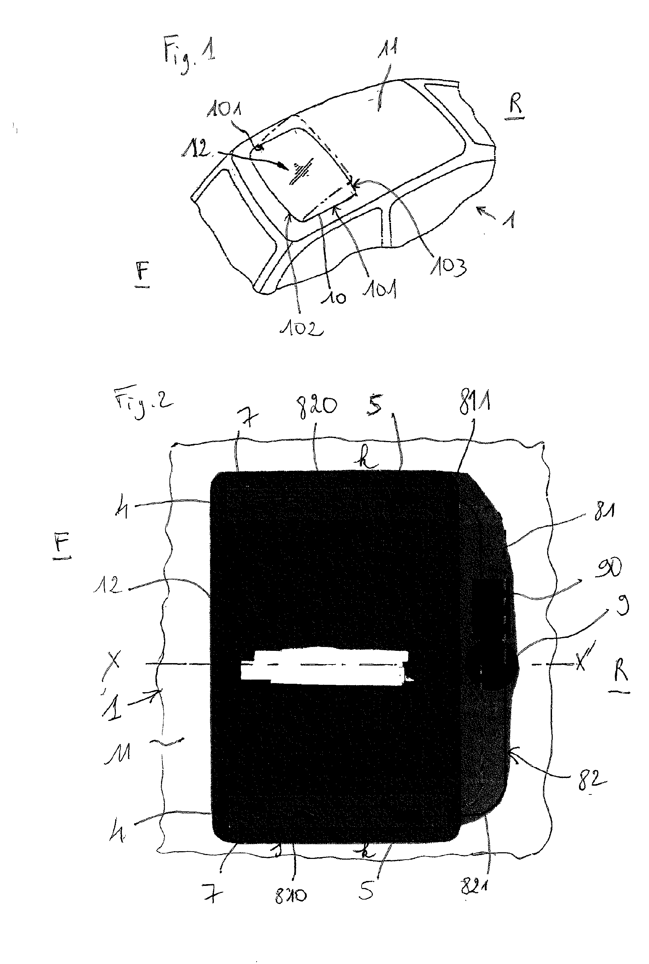

On figure 1, we can see a roof opening 10 provided in the roof 11 of a vehicle 1. The roof opening 10 comprised two longitudinal sides 101, a front edge 102 and a rear edge 103.

In the description and the claims, the words "outer" and "inner" are used by reference to the outer side of the roof opening and the inner side thereof (i.e. the void).

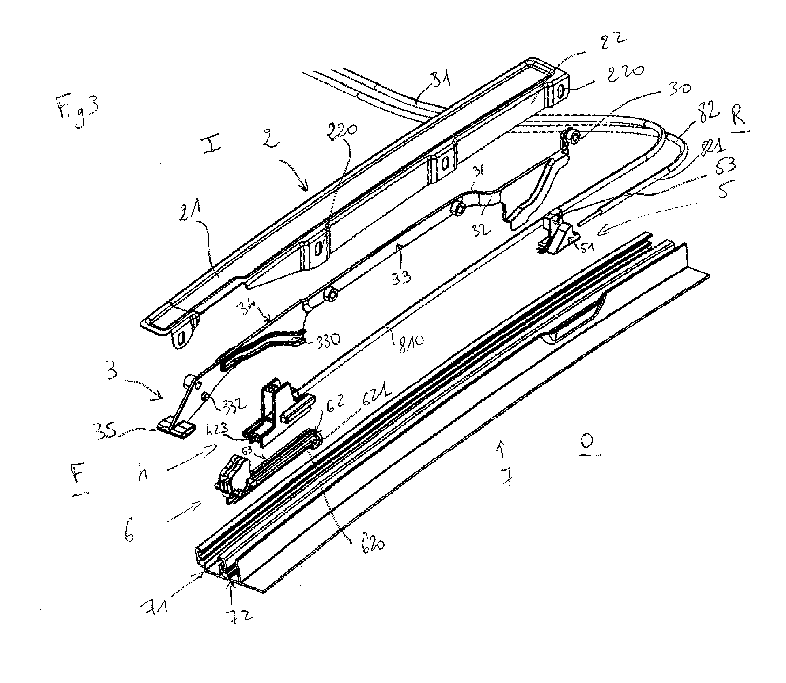

In figures 3, 4, 6 and 7, the inner side is represented by the letter l and the outer side by the letter O.

The roof opening 10 is provided with a sliding roof device which comprises a movable cover 12 represented in solid line in its closed position (closure of the roof opening 10) and in dotted line in a tilted ventilation position. Further, this movable cover 12 can be moved rearwards in the rear direction of the vehicle located on the right side of figure 1.

The movable cover 12 is preferably a transparent or translucent cover, especially a glass cover.

Besides the movable cover 12, the sliding roof device also comprises, on each side of the roof opening 10: a lateral bracket 2, a sliding element 3, first displacement means, a second carriage 5 and a guide rail 7, said first displacement means comprising a first carriage 4 and a locking part 6, as can be seen on figures 2, 3 and 4, for example. In other words, in the sliding roof device of the invention, all these elements are duplicated. Further, the sliding roof device comprises two cables 81, 82 and driving means 9.

The elements 2 to 7 are symmetric on each side of a vertical plan represented by the line X-X' in figure 2.

One possible embodiment of these different elements will now be described in details.

The lateral bracket 2 is preferably an L profile with a horizontal leg 21 onto which the movable cover 12 is fixed on a sealing way by any appropriate means and a vertical leg 22 intended to be fixed to the sliding element 3. The fixation can be done by whatever appropriate means, for example by screws and bolts not represented in the figures and engaged in the holes 220 and 30 respectively provided in the vertical leg 22 and the sliding element 3. The lateral bracket 2 and the sliding element 3 are fixed together such a way that any movement of the sliding element 3 is transmitted to the movable cover 12.

Advantageously, the sliding element 3 is a thin rigid elongated profile extending longitudinally provided with two successive steps 31, 32 extending vertically at right angles such that the front part and the rear part of the sliding element 3 extend in two vertical distinct parallel plans.

The sliding element 3 comprises two opposite vertical faces, namely an outer face 33 and an inner face 34.

The outer face 33 and an inner face 34 are each provided with one front cam groove, respectively 330, 340, extending near the front end of the sliding element 3. Each one of these grooves 330, 340 has a curved shape and extends from the top and front part toward the bottom and rear part of the sliding element 3. Further, each groove 330, 340, is closed at its front end and open at its rear end.

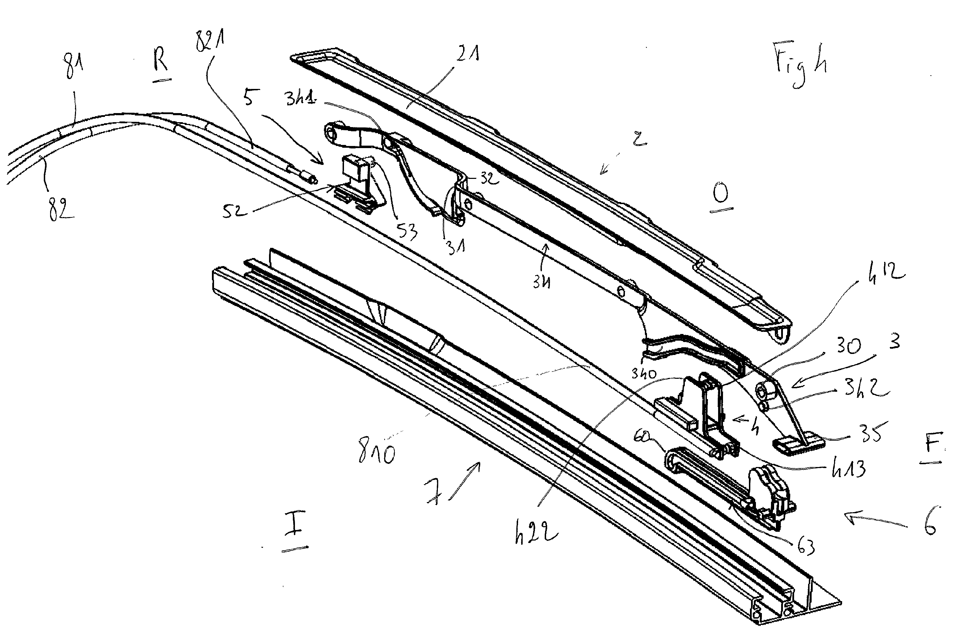

As can be seen on figure 4, the inner face 34 is provided with a rear cam groove 341, extending close to the rear end of the sliding element 3, after the step 32. The groove 341 has a curved shape and extends from the top and rear part toward the bottom and front part of the sliding element 3. Further, the groove 341 is closed at its rear end and open at its front end.

The front end of the sliding element 3 is provided with one slider 35 which extends perpendicularly from both faces 33, 34 and which has a flat shape.

Finally, both outer face 33 and inner face 34 are provided with a front pin 332, respectively 342, located between the front end of the grooves 330, 340 and the slider 35.

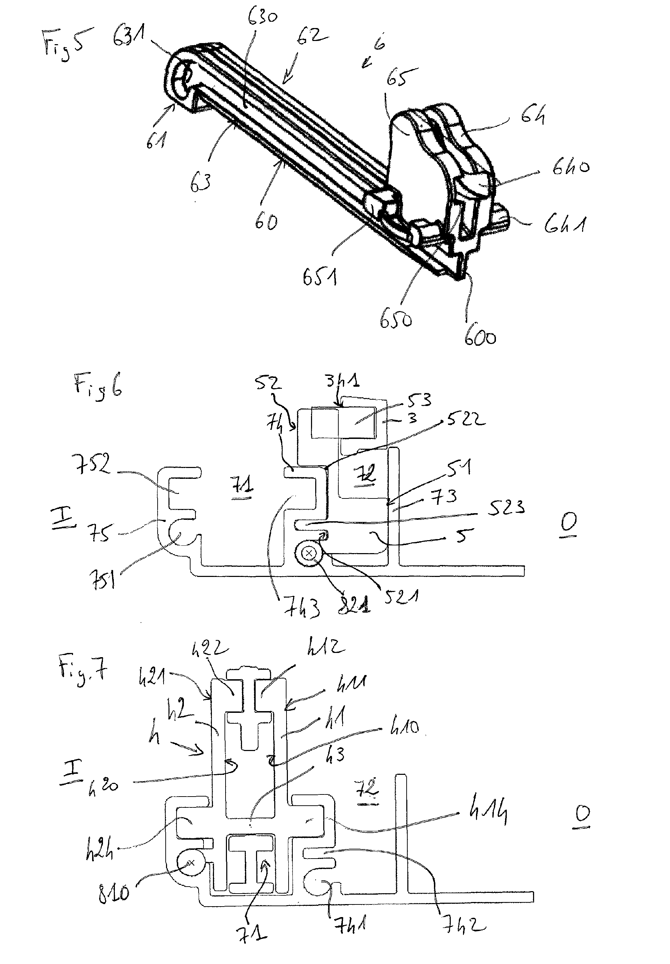

As can be best seen on figure 5, the locking part 6 comprises an elongated part 60, the rear end of which is bent downwards to form a hook 61.

The elongated part 60 comprises two opposite vertical faces, namely an outer face 62 and an inner face 63.

Both of the outer face 62 and the inner face 63 are provided with one cam groove 620 (visible only on figure 3), respectively 630, which extends from the front end of the locking part 6 until the hook 61 and thus which is curved and closed at its end 621, 631. Said grooves are termed "driving cam grooves". The central part of the locking part 6 constitutes a thin web 600.

The front end of the elongated part 60 extends upward by two flanges, respectively an outer flange 64 and an inner flange 65 spaced apart from each other.

Each faces of the outer flange 64 and the inner flange 65 facing one another are provided with a curved cam groove 640, respectively 650, named "tilting groove". The tilting grooves 640, 650 are curved from the bottom and the front to the top and rear of the flanges 64, 65. The grooves 640, 650 receive the front pin 332 and the front pin 342 respectively and guide them during the raising and lowering movement of the movable cover 12.

Finally, each one of the opposite faces of the two flanges 64, 65 has a lateral horizontal guiding wing 641, respectively 651.

The guide rail 7 will now be described in relation to figures 3, 4, 6 and 7.

The guide rail 7 is an elongated profile member disposed along the longitudinal edge 101 of the opening roof 10.

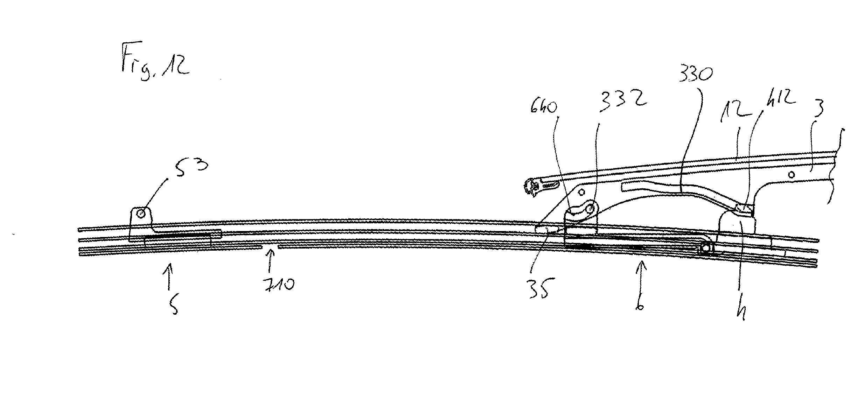

As can be seen on the section views of figures 6 and 7, the guide rail 7 comprises two parallel longitudinal paths, namely an outer path 72 and an inner path 71. These paths are open on the top. Further, the bottom of the inner path 71 comprises a hole 710 (see figure 12).

The outer path 72 is bounded by an outer vertical flat wing 73 and a central wing 74, whereas the inner path 71 is bounded by the central wing 74 and an inner wing 75.

The central wing 74 is shaped to define successively from the bottom to the top, a cylindrical longitudinal channel 741, a flat longitudinal channel 742, (both of them opening in the outer path 72) and a large longitudinal channel 743, preferably of square section, opening in the inner path 71.

The inner wing 75 is shaped to define successively from the bottom to the top, a cylindrical longitudinal channel 751 and a large longitudinal channel 752, preferably of square section, both of them opening in the inner path 71. The channels 743 and 752 open at the same high in the path 71.

As can be seen on figures 4 and 7, the first carriage 4 comprises two parallel vertical flanges, namely an outer flange 41 and an inner flange 42, spaced apart and linked by a horizontal crosspiece 43.

The flanges 41 and 42 have respective faces 410 and 420 facing each other and opposite faces 411, respectively 421.

Each flange 41, 42 has the general shape of a reverse T.

Two top guide pins 412, 422 extend respectively from the facing faces 410, 420 in the top area of the vertical central branch of the T. These guide pins 412, 422 are respectively received in the front cam grooves 330 and 340.

Two front guide pins 413, 423 extend respectively from the facing faces 410, 420 in the end area of the front horizontal branch of the T. These front guide pins 413, 423 are respectively received in the driving cam grooves 620 and 630 of the locking part 6 where they can slide.

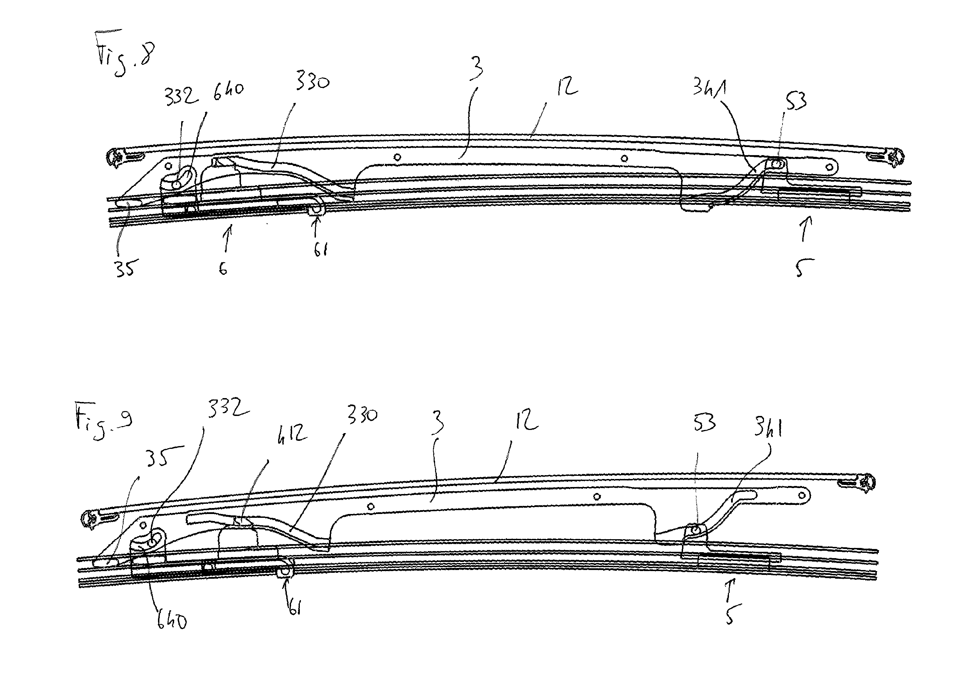

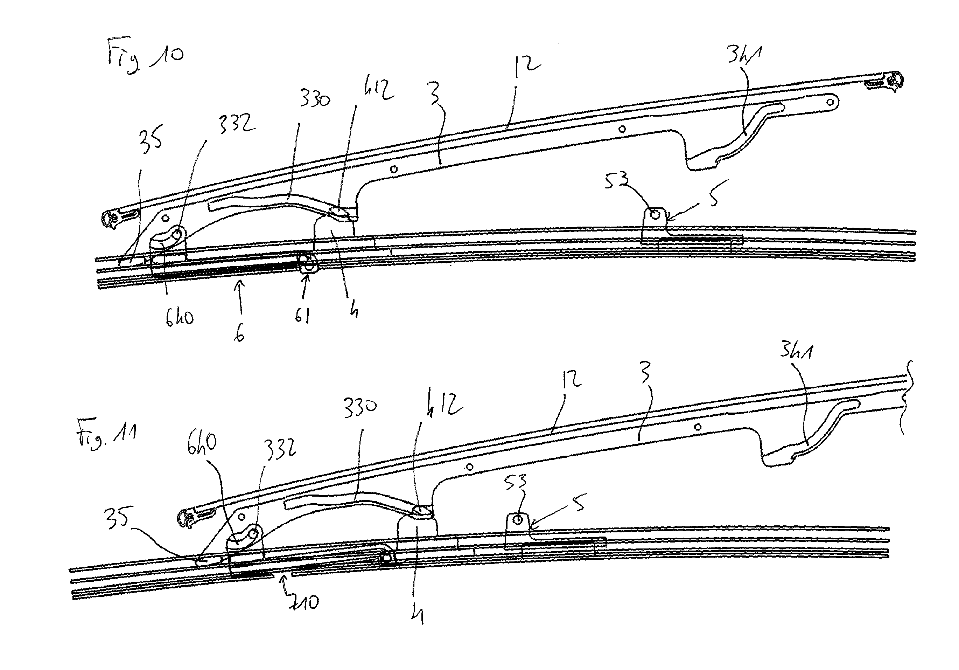

The front guide pin 413, 423 and the driving cam grooves 620, 630 constitute cooperation means. During the rearwards movement of the first carriage 4 (see figures 8 to 10), the front guide pins 413, 423 slide inside the driving cam groove on a limited stroke until they reach the hooked closed end 621, 631 of said driving cam groove 620, 630 inside which they lock (see figures 10 and 11).

When the first carriage follows its rearwards movement, it causes the hook 61 to exit outside the hole 710 and then the locking part 6 follows in rearwards direction. The movable cover 12 is also displaced rearwards (see figure 11 and 12).

Reversely, when the first carriage 4 is displaced forwards (from figure 12 towards the left), it moves the locking part 6 until the hook 61 reaches the hole 710. Then, the first carriage 4 follows its forwards movement on a limited stroke relative to the locking part 6 to come back to the original position of figure 8.

One horizontal guiding slider 414, respectively 424, extends perpendicularly from the opposite faces 411, respectively 421 of the flanges 41, 42. The sliders 414, 424 are respectively received in the large channels 743, 752, where they can slide (see figure 7). Further, the slider 35 is also configured to be able to slide inside said channels 743, 752 and to act as a pivoting point as can be seen on figures 10 to 12.

The elements represented on figures 3, 4, 6 and 7 are those located on the bottom part of figure 2.

In this case, the end of the active strand 810 of the first cable 81 is fixed to the first carriage 4 and is received in the cylindrical channel 751 of the wing 75.

As can be seen on figures 3, 4 and 6, the second carriage 5 comprises two opposite faces, namely an outer face 51 and an inner face 52.

The inner face 52 comprises successively from the bottom to the top, a thin bottom groove 521 and a large top groove 522 and between them a linear horizontal thin rib 523. The thin rib 523 is received in the flat longitudinal channel 742 of the central wing 74. The large top groove 522 surrounds the top part of the central wing 74 forming the channel 743.

The width of the basis of the second carriage 5 corresponds, to within a clearance to the width of the outer path 72, such that the second carriage 5 can slide inside said outer path 72.

The outer face 51 is provided on its top area with a horizontal guide pin 53. This guide pin 53 is received and is slideably guided in the rear cam groove 341. Further, the presence of the two steps 31, 32 allows positioning the second carriage 5 on the inner face 34 of the sliding element 3.

As can be seen on figures 8 and 9, a forwards movement of the second carriage 5 raises the rear edge of the movable cover 12 into the tilted ventilation position and a rearwards movement of said second carriage 5 lowers the movable cover towards the roof opening 10.

Finally, the end of the dead strand 821 of the second cable 82 is fixed to the second carriage 5 located on the same side of the opening roof as the first carriage 4 represented on figures 3 and 4 and this dead strand 821 is received in the cylindrical channel 741 of the central wing 74.

As can be seen on figure 2, it has to be noted that for the elements of the sliding roof located on the top side of figure 2, the second carriage 5 is fixed to the dead strand 811 of the first cable 81, this dead strand 811 being received in the cylindrical channel 741 whereas the first carriage 4 is fixed to the active strand 820 of the second cable 82, this active stand 820 being received in the cylindrical channel 751 of the outer wing 75.

The cables 81, 82 are moved by driving means 9, preferably a sole motor 9 or two motors 9 controlled by a central unit 90. With two motors 9, each one drives a cable, with a sole motor 9, the cables are disposed to be driven in opposite direction.

In both cases, when a first carriage 4 is driven rearwards (arrows j on figure 2), the second carriage 5, which is fixed to the opposite end of the cable to which said first carriage is fixed, is moved forwards (arrows k on figure 2) and vice and versa.

It has been noted that in the embodiment described, the inner path 71 is the first guiding means which receive the first carriage 4 and the outer path 72 is the second guiding means which receive the second carriage 5. Nevertheless, the relative position of the inner path 71 and the outer path 72 could be exchanged and the first carriage 4 could thus be positioned and guide in an appropriate outer path.

The embodiment of sliding roof above described is intended to be mounted in the vehicle 1 by the aperture receiving the windscreen.

## Claims

1. Sliding roof device for a motor vehicle, comprising a movable cover (12) for selectively closing and at least partially exposing a roof opening in the motor vehicle roof, the movable cover (12) being also raisable at a rear edge thereof into a tilted ventilation position,
**characterized in that**, it further comprises:
- two first displacement means (4, 6), guided in translation respectively into two first guiding means (71) facing each other on each longitudinal edge of the roof opening, these first displacement means being configured for raising, lowering and sliding rearwards and forwards said movable cover (12),
- two carriages (5) named "second carriages", guided in translation respectively into two second guiding means (72) facing each other on each longitudinal side of the roof opening, these second carriages (5) being configured for raising the rear edge of said movable cover (12) into the tilted ventilation position and for lowering it toward the roof opening,
- two cables (81, 82) driven by driving means (9), each cable (81, 82) comprising an active strand (810, 820) and a dead strand (811, 821), the active strand (810, 820) of each cable (81, 82) being linked to one of the two first displacement means (4, 6) disposed on one longitudinal side of the roof opening whereas the dead strand (811, 821) of the same cable (81, 82) is linked to the second carriage (5) which is disposed on the opposite longitudinal side of the roof opening, the cables being driven in such a way that when the first displacement means (4, 6) are moved rearwards, the second carriages (5) are moved forwards and vice versa.

2. Sliding roof device according to claim 1, **characterized in that** the movable cover (12) is provided with a sliding element (3) on both of its longitudinal sides, each sliding element (3) being an elongated profile presenting two opposite vertical faces (33, 34) and being provided with a slider (35) at its front end, a rear cam groove (341) being formed in one (34) of its vertical faces, the slider (35) being able to slide into the first guiding means (71) and to act as a pivoting point during the displacement of the movable cover (72) in the tilted ventilation position and it that each second carriage (5) is provided with a guide pin (53) configured to slide inside said rear cam groove (341) such that a forwards movement of said second carriage (5) raises the rear edge of the movable cover (12) into the tilted ventilation position and such that a rearwards movement of said second carriage (5) lowers the movable cover (12) towards the roof opening.

3. Sliding roof device according to claim 1 or 2, **characterized in that** it comprises two guide rails (7), each one being disposed along each longitudinal edge of the roof opening, each guide rail comprising two parallel longitudinal paths (71, 72), namely a first path (71) and a second path (72) which constitute respectively the first and the second guiding means.

4. Sliding roof device according to claims 2 and 3, **characterized in that** the top part (743, 752) of the first path (71) is configured to constitute the guiding means of the slider (35) of the sliding element (3).

5. Sliding roof device according to anyone of the preceding claims, **characterized in that** each first displacement means comprises a carriage (4) named "first carriage" and a locking part (6), each first carriage (4) being linked to the active strand (810, 820) of one cable (81, 82), **in that** the movable cover (12) is provided with a sliding element (3) on both of its longitudinal sides, each sliding element (3) being an elongated profile presenting two opposite vertical faces (33, 34) and being provided with a slider (35) at its front end, the slider (35) being able to slide into the first guiding means and to act as a pivoting point during the displacement of the movable cover in the tilted ventilation position, the locking part (6) being provided with tilting means (640, 650) cooperating with corresponding articulation means (332, 342) provided on the sliding element (3) for guiding the sliding element (3) during the raising and the lowering of the cover panel (12) in the tilted ventilation position and **in that** the first carriage (4) and the locking part (6) are provided with cooperating means (413, 423, 620, 630) authorizing a relative movement of the first carriage (4) relative to the locking part (6) on a limited stroke and the locking of the first carriage (4) with the locking part (6) beyond this limited stroke such that once locked together, the movement of the first carriage (4) in one direction causes the movement of the locking part (6) in the same direction.

6. Sliding roof device according to claim 5, **characterized in that** the locking part (6) comprises an elongated part (60), the rear end of which is bent downward to form a hook (61), **in that** said locking part (6) is provided on at least one of its lateral side with a driving cam groove (620, 630) also bent downward and closed at its rear end, **in that** the first carriage (4) is provided with at least one front guide pin (413, 423) able to slide inside said driving cam groove (620, 630), this guide pin (413, 423) and this driving cam groove (620, 630) constituting said cooperating means, **in that** the first driving rail (71) is provided with a hole (710) configured to received said hook (61), such that during the rearwards movement of the first carriage (4), the front guide pin (413, 423) slides inside the driving cam groove on a limited stroke until it reaches the hooked closed end (621, 631) of said driving cam groove (620, 630) inside which it is locked, such that when following its rearwards movement, the first carriage (4) firstly causes the hook (61) of the locking part to exit the hole (710), then the locking part (6) to follow rearwards and the movable cover (12) to be displaced rearwards and such that when following its forwards movement, the first carriage (4) firstly displaces the locking part (6) until the hook (61) being locked in the hole (710), thus displacing the movable cover (12) forwards and secondly continue its forwards movement relative to the locking part (6) for lowering the movable cover (12) toward the roof opening.

7. Sliding roof device according to claim 5 or 6, **characterized in that** a front cam groove (330, 340) is formed in at least one of the vertical faces (33, 34) of the sliding element (3), **in that** each first carriage (4) is provided with at least one guide pin (412, 422) configured to slide inside said front cam groove and **in that** each front cam groove (330, 340) is configured such a way that a rearwards movement of the first carriage (4) raises the movable cover (12) into the tilted ventilation position and a forwards movement of the first carriage (4) lowers the movable cover (12) towards the roof opening.

8. Sliding roof device according to anyone of the preceding claims, **characterized in that** the driving means (9) are two distinct motors, each one driving one of the two cables (81, 82).

9. Sliding roof device according to claim 1, **characterized in that** the driving means (9) are a sole motor which drives the two cables (81, 82) in opposite directions.

10. Motor vehicle (1) comprising a roof opening (10), **characterized in that** it comprises a sliding roof device according to any of the preceding claims.
